# EUROPEAN PATENT APPLICATION

(11) **EP 1 691 549 A1**
(43) Date of publication of application: **16.08.2006**
(21) Application number: 06001735.7
(22) Date of filing: 27.01.2006
(51) Int. Cl.: H04N 7/14

(54) **Method and system for image editing in a mobile multimedia processor**

(30) Priority: 12.02.2005 US 652481 P; 17.01.2006 US 332892
(71) Applicant: Broadcom Corporation, Irvine, CA 92618-7013 (US)
(72) Inventor: Loo, Patrick, Irvine California 92618-7013 (US)
(74) Representative: Jehle, Volker Armin

(57) **Abstract**

Certain embodiments of the invention may be found in a method and system for image editing in a mobile multimedia processor and may include editing image data within a mobile multimedia chip comprising an integrated image editor. At least a portion of the image data may be acquired for the editing from at least one of a plurality of storage devices. The at least one of the plurality of storage devices may be integrated within the mobile multimedia chip, and/or may be located external to the mobile multimedia chip. The mobile multimedia chip may be integrated within a mobile device with a visual display that displays at least a portion of the edited image data. The image data may be edited within the mobile multimedia chip independent of a file format associated within the image data.

## Description

### CROSS-REFERENCE TO RELATED APPLICATIONS/INCORPORATION BY REFERENCE

This application makes reference to, claims priority to, and claims the benefit of United States Provisional Application Serial No. 60/652,481 (Attorney Docket No. 16436US01) filed February 12, 2005 and entitled "Method And System For Image Editing In A Mobile Multimedia Processor."

This application make reference to:
United States Patent Application Serial No. (Attorney Docket No. 16430US02) filed , 2006;
United States Patent Application Serial No. (Attorney Docket No. 16431 US02) filed , 2006;
United States Patent Application Serial No. (Attorney Docket No. 16432US02) filed , 2006;
United States Patent Application Serial No. (Attorney Docket No. 16433US02) filed December 14, 2005;
United States Patent Application Serial No. (Attorney Docket No. 16434US02) filed ,2006;
United States Patent Application Serial No. (Attorney Docket No. 16435US02) filed December 14, 2005;
United States Patent Application Serial No. (Attorney Docket No. 16437US02) filed , 2006;
United States Patent Application Serial No. (Attorney Docket No. 17063US02) filed on even date herewith; and
United States Patent Application Serial No. (Attorney Docket No. 17064US02) filed on even date herewith.

Each of the above stated applications is hereby incorporated herein by reference in its entirety.

### FIELD OF THE INVENTION

Certain embodiments of the invention relate to mobile multimedia communication. More specifically, certain embodiments of the invention relate to a method and system for image editing in a mobile multimedia processor.

### BACKGROUND OF THE INVENTION

Mobile communications have changed the way people communicate and mobile phones have been transformed from a luxury item to an essential part of every day life. The use of mobile phones today is dictated by social situations, rather than hampered by location or technology. While voice connections fulfill the basic need to communicate, and mobile voice connections continue to filter even further into the fabric of every day life, various integrated mobile multimedia applications, utilizing the mobile Internet, may be the next step in the mobile communication revolution.

Third generation (3G) cellular networks offering various high speed access technologies and mobile telephones that have been specifically designed to utilize these technologies, fulfill demands for integrated multimedia applications supporting TV and audio applications utilizing advanced compression standards, high-resolution gaming applications, musical interfaces, peripheral interface support, etc. The processing requirements are being increased as chip designers take advantage of compression and higher bandwidths to transmit more information. 3G wireless applications support bit rates from 384 kilobits (Kbits)/second to 2 megabits (Mbits)/second, allowing chip designers to provide wireless systems with multimedia capabilities, superior quality, reduced interference, and a wider coverage area.

As mobile multimedia services grow in popularity and usage, factors such as power consumption, cost efficient optimization of network capacity and quality of service (QoS) will become even more essential to cellular operators than it is today. These factors may be achieved with careful network planning and operation, improvements in transmission methods, and advances in receiver techniques and chip integration solutions. To this end, carriers need technologies that will allow them to increase downlink throughput for the mobile multimedia applications support and, in turn, offer advanced QoS capabilities and speeds for consumers of mobile multimedia application services.

Currently, mobile multimedia processors may not fully utilize system-on-a-chip (SoC) integration for advanced total system solution for today's mobile handsets. For example, conventional mobile processors may utilize a plurality of hardware accelerators to enable a variety of multimedia applications, which significantly increases power consumption, implementation complexity, mobile processor real estate, and ultimately terminal size. Notwithstanding, the rollout of new technologies providing increased downlink capacity has further fueled the demand for a new generation of multimedia applications. These new generations of multimedia applications aim at providing capabilities that are on par with applications typically found in personal computer (PC) type applications.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for image editing in a mobile multimedia processor, substantially as shown in and/or described in connection with at least one of the figures, as set forth more completely in the claims.
According to an aspect of the invention, a method for processing multimedia information is provided, the method comprising editing image data within a mobile multimedia chip comprising an integrated image editor.
Advantageously, the method further comprises acquiring at least a portion of said image data for said editing from at least one of a plurality of storage devices.
Advantageously, said at least one of said plurality of storage devices is one of the following: integrated within said mobile multimedia chip, and located external to said mobile multimedia chip.
Advantageously, said mobile multimedia chip is integrated within a mobile device comprising a visual display that displays at least a portion of said edited image data.
Advantageously, the method further comprises editing said image data within a mobile multimedia chip independent of a file format associated with said image data.
Advantageously, the method further comprises editing said image data within said mobile multimedia chip independent of a source location of said image data.
Advantageously, the method further comprises editing raw pixel data of said image data, within said mobile multimedia chip.
Advantageously, the method further comprises editing said image data within said mobile multimedia chip utilizing at least one plugin that interfaces within said mobile multimedia chip.
Advantageously, the method further comprises converting at least a portion of said image data by said mobile multimedia chip from a native image format of said image data to an image format compliant with said mobile multimedia chip for said editing.
Advantageously, the method further comprises editing said image data using a striping method based on a format of said image data.
Advantageously, said image data comprises video data.
According to an aspect of the invention, a system for processing multimedia information is provided, the system comprising an image editor integrated within a mobile multimedia chip that edits image data received within said mobile multimedia chip.
Advantageously, said image editor integrated within said mobile multimedia chip acquires at least a portion of said image data for said editing from at least one of a plurality of storage devices.
Advantageously, said at least one of said plurality of storage devices is one of the following: integrated within said mobile multimedia chip, and located external to said mobile multimedia chip.
Advantageously, said image editor integrated within said mobile multimedia chip is integrated within a mobile device comprising a visual display that displays at least a portion of said edited image data.
Advantageously, said image editor integrated within said mobile multimedia chip edits said image data independent of a file format associated with said image data.
Advantageously, said image editor integrated within said mobile multimedia chip edits said image data independent of a source location of said image data.
Advantageously, said image editor integrated within said mobile multimedia chip edits raw pixel data of said image data.
Advantageously, said image editor integrated within said mobile multimedia chip edits said image data utilizing at least one plugin that interfaces within said mobile multimedia chip.
Advantageously, said image editor integrated within said mobile multimedia chip converts at least a portion of said image data from a native image format of said image data to an image format compliant with said mobile multimedia chip for said editing.
Advantageously, said image editor integrated within said mobile multimedia chip edits said image data using a striping method based on a format of said image data.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of an exemplary mobile device utilizing a mobile multimedia chip with integrated image editor, in accordance with an embodiment of the invention.

FIG. 1B is a block diagram of an exemplary mobile multimedia system with integrated image editor, in accordance with an embodiment of the invention.

FIG. 2A is a high level block diagram illustrating an exemplary image editor, in accordance with an embodiment of the invention.

FIG. 2B is a block diagram illustrating an exemplary image editor, in accordance with an embodiment of the invention.

FIG. 3 is a flow diagram of exemplary steps for processing video data utilizing a striping method, in accordance with an embodiment of the invention.

FIG. 4 is a block diagram of illustrating image operation for the image editor of FIG. 2B, for example, in accordance with an embodiment of the invention.

FIG. 5 is a flow diagram of exemplary steps for processing multimedia data, in accordance with an embodiment of the invention.

### DETAILED DESCRIPTION OF THE INVENTION

Certain embodiments of the invention may be found in a method and system for image editing in a mobile multimedia processor and may include editing video data within a mobile multimedia chip. The mobile multimedia chip may enable acquisitions of video data for the editing from on-chip memory and/or off-chip memory. The mobile multimedia chip may be integrated within a mobile device comprising a visual display that displays at least a portion of the edited video data. The mobile multimedia chip may edit video data independent of a file format and/or a source location of the video data. Furthermore, the mobile multimedia chip may enable editing of raw pixel data of the video data, and also enable conversion of the video data from a native image format of the video data to an image format compliant with the mobile multimedia chip for the editing. In one embodiment of the invention, one or more plugins may interface within the mobile multimedia chip in order to provide additional image editing functionalities, such as "red eye" reduction functionalities.

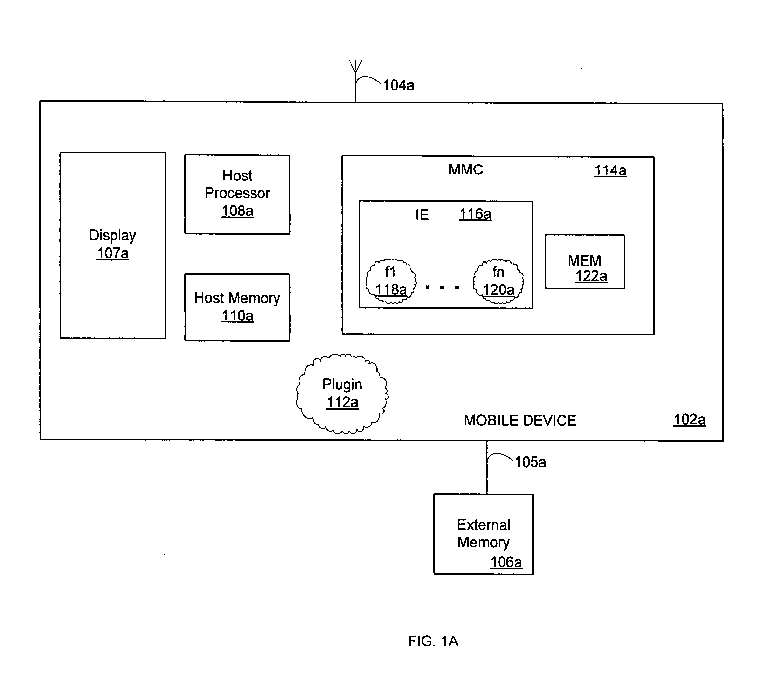

FIG. 1A is a block diagram of an exemplary mobile device utilizing a mobile multimedia chip with integrated image editor, in accordance with an embodiment of the invention. Referring to FIG. 1A, the mobile device 102a may comprise a display 107a, a host processor 108a, host memory 110a, antenna 104a, and a mobile multimedia chip 114a. The mobile multimedia chip 114a may be utilized for processing audio and/or video data within the mobile device 102a. The mobile multimedia chip 114a may comprise an image editor 116a and on-chip memory 122a.

In accordance with an embodiment of the invention, the image editor 116a may provide PC application-type editing functionalities for the mobile device 102a. For example, the image editor 116a may enable editing functionalities found in PC applications such as Photoshop™. The image editor 116a may comprise suitable circuitry, logic, and/or code and may provide a plurality of image editing functions for editing a plurality of images 118a, ..., 120a. The image editing functionality may be utilized by the mobile multimedia chip 114a and/or the host processor 108a within the mobile device 102a during processing of video data. The image editor 116a may perform a plurality of image editing functions on at least portions of an image at a time, in order to optimize memory usage and/or processing bandwidth within the mobile device 102a. Some exemplary features of the image editor 116a may comprise producing true color full resolution picture frames, CamPlus™ effects which may be applied offline, and part-shot combining. Some additional exemplary features of the image editor 116a may comprise adding text to an image via a masked fill operation and using plugins for advanced or customized image operations, such as, for example, correcting brightness/contrast/color balance, etc.

During exemplary video editing, the image file format and image file location may be transparent or hidden from the mobile multimedia chip 114a and/or the host processor 108a, thereby allowing the addition of further file formats and the processing of compressed images which may be loaded into the on-chip memory 122a for processing. In this regard, the image file format may be isolated from the physical location of the video data in order to facilitate processing. Furthermore, memory buffers storing video data for processing may be identified by an identifier such as a user defined ID, rather than an absolute memory address. Video data for processing may be received by the mobile multimedia chip 114a from an external video data source via the antenna 104a, or from the external memory 106a via the connection 105a.

In another embodiment of the invention, the image editor 116a may enable processing of arbitrarily sized images 118a, ..., 120a offline, and allow the mobile multimedia chip 114a and/or the host processor 108a to access raw pixel data of any image and utilize it as part of a graphical user interface (GUI). In accordance with another embodiment of the invention, the image editor 116a may enable third (3^{rd}) parties to write plugin 112a that may be utilized to implement user-defined functions or effects for operating on images, such as any one of the plurality of images 118a, ..., 120a. For example, the image editor 116a may be enable third (3^{rd}) parties to write various plugins such as plugin 112a, which may be used within the mobile device 102a to implement a red eye reduction function when processed video data is displayed on the video display 107a.

Exemplary image formats supported by the image editor 116a may comprise Joint Photographic Experts Group (JPEG) format, graphics interchange format (GIF), and portable network graphics (PNG) format. JPG is a compression technique that is designed to compress color and gray-scale continuous-tone images. JPEG images may support 16 million colors and may be utilized for photographs and complex graphics. GIF is a compression technique that supports 256 colors and may be utilized with line drawings, black and white images and small text that is a few pixels high. The GIF format may also support transparency, where the background color may be set to transparent in order to let the color of the underlying Web page to show through. The PNG format may utilize higher compression than the GIF format, and may also utilize opacity, or control of the degree of transparency.

In accordance with one embodiment of the invention, PNG and GIF formats may be supported by the image editor 116a. If the image editor 116a utilizes PNG formatting, 24 bits per pixel (bpp) may be used during video data editing, with an alpha channel and without interlacing. If the image editor 116a utilizes GIF formatting, video data editing may be achieved without interlacing, local color map and/or animation. Notwithstanding, the invention may not be limited in this regard. PNG decoding, PNG encoding, and GIF encoding may be enabled as a default option. This may be done by, for example, setting a flag or parameter when compiling the image editor 116a, a PNG CODEC and/or a GIF CODEC to enable PNG encoding/decoding and GIF encoding.

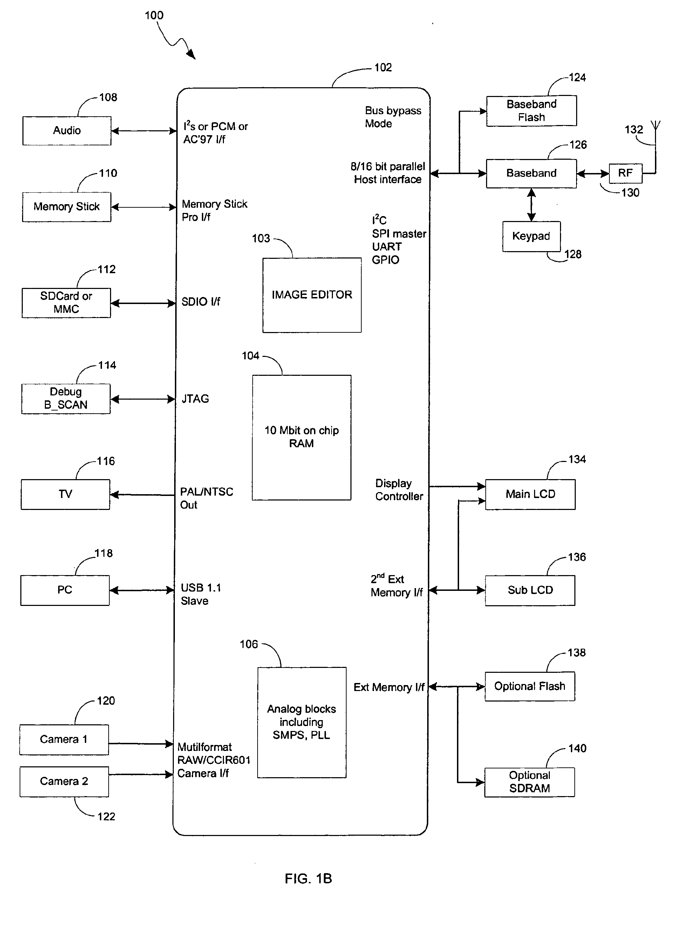

FIG. 1 B is a block diagram of an exemplary mobile multimedia system with integrated image editor, in accordance with an embodiment of the invention. Referring to FIG. 1B, there is shown a mobile multimedia system 100 that comprises a core processor 102, an audio block 108, a memory stick block 110, a SanDisk (SD) Card block 112, a debug block 114, a TV block 116, a PC block 118, a plurality of camera blocks, namely camera 1 120 and camera 2 122. The system 100 may further comprise a baseband flash block 124, a baseband block 126, a keypad block 128, a RF block 130, an antenna 132, a main LCD block 134, a sub LCD block 136, an optional flash block 138 and an optional SDRAM block 140. The core processor 102 may comprise a RAM block 104, an image editor 103, and an analog block 106.

The core processor 102 may comprise suitable logic, circuitry and/or code that may enable video and/or multimedia data processing for handheld multimedia devices. The core processor 102 may be designed and optimized for video record/playback, mobile TV and 3D mobile gaming, for example. The core processor 102 may comprise a fully programmable architecture, which may enable a range of multimedia functions to be executed in software without the costly overhead and time to market uncertainty that may be associated with hardware accelerators. The core processor 102 may comprise suitable logic, circuitry and/or code that may combine video and audio processing, polyphonic sound synthesis, an LCD controller and SRAM on a single chip. This integrated design simplifies design while saving cost, space and power. The core processor 102 may either be utilized as a stand-alone multimedia processor or as a co-processor in conjunction with a host.

The core processor 102 may be, for example, a 150 MHz dual algorithmic logic unit (ALU) VideoCore® II processor with 128K bit instruction and data caches, for example. The core processor 102 may be digital rights management (DRM) capable with a unique chip ID code, for example. The core processor 102 may be incorporated with content protection for recordable media (CPRM) encryption for various products and algorithms, for example, SD card, advanced encryption standard (AES), 3 data encryption standard (3DES) and Rivest-Shamir-Adleman (RSA). The core processor 102 may have an encrypted code with a freely programmable key. The core processor 102 may be utilized for video compression such as running video CODECs such as MPEG-4, H.263 or H.264. The core processor 102 may be utilized for video processing such as image-sensor front end processing, de-blurring and de-noising or for video analysis such as segmentation, object recognition or smart sensors. The core processor 102 may comprise 52 general-purpose I/O (GPIO) pins, for example. The GPIO pins may be utilized for user defined I/O or to connect to the internal peripherals.

The core processor 102 may comprise an image editor 103, a RAM block 104 and an analog block 106. The image editor 103 may comprise suitable circuitry, logic, and/or code and may enable video data editing functionalities for the mobile multimedia system 100. For example, the image editor 103 may provide the same image editing functionalities as the image editor 116a in FIG. 1A. The RAM block 104 may comprise suitable logic, circuitry and/or code that may store on-chip data, for example, 10 Mbits of on-chip data. The analog block 106 may comprise, for example, a switch mode power supply (SMPS) block and a phase locked loop (PLL) block.

The analog block 106 may comprise an on-chip SMPS controller, which may enable generation of its core voltage. The core voltage may be software programmable according to speed demands on the core processor 102, allowing further control of power management. The normal core operating range may be 0.8 V - 1.2 V, for example, and may be reduced to 0.6 V, for example, during hibernate mode. The analog block 106 may comprise a plurality of PLLs that may enable generation of 195 kHz - 200 MHz clocks for external devices, for example. The core processor 102 may comprise a plurality of power modes of operation, for example, run, sleep, hibernate and power down. In accordance with an embodiment of the invention, the core processor 102 may comprise a bypass mode that may allow a host to access memory mapped peripherals in power down mode, for example. In bypass mode, the core processor 102 may enable direct control the display during normal operation while giving a host the ability to maintain the display during standby mode.

The audio block 108 may comprise suitable logic, circuitry and/or code that may communicate with the core processor 102 via an inter-IC sound (I²S), pulse code modulation (PCM) or audio codec (AC'97) interface, for example. The AC'97/ I²S controller may provide AC'97/ I²S audio output in either master or slave mode. The PCM interface may allow input and output of telephony or high quality stereo audio. The PCM controller may comprise independent transmit and receive first in first out (FIFO) buffers and may use DMA to further reduce processor overhead. The audio block 108 may also comprise an audio in, audio out port and a speaker/microphone port, for example. The memory stick block 110 may comprise suitable logic, circuitry and/or code that may enable communication with the core processor 102 via a memory stick pro interface, for example. The SD card block 112 may comprise suitable logic, circuitry and/or code that may communicate with the core processor 102 via a SD input/output (I/O) interface, for example. A multimedia card (MMC) may also be utilized to communicate with the core processor 102 via a SD input/output (I/O) interface, for example.

The debug block 114 may comprise suitable logic, circuitry and/or code that may communicate with the core processor 102 via a joint test action group (JTAG) interface, for example. The debug block 114 may access the address space of the core processor 102 and may perform a boundary scan via an emulation interface. The TV block 116 may comprise suitable logic, circuitry and/or code that may communicate with the core processor 102 via a phase alternate line (PAL) or national television standards committee (NTSC) Out port, for example.

The PC block 118 may comprise suitable logic, circuitry and/or code that may communicate with the core processor 102 via a universal serial bus (USB) 1.1 slave port, for example. The plurality of cameras camera 1 120 and camera 2 122 may comprise suitable logic, circuitry and/or code that may communicate with the core processor 102 via a multiformat raw CCIR 601 camera interface, for example. The core processor 102 may further comprise a programmable 8/16-bit CMOS/CCD camera input port and may support up to two 8-megapixel image sensors and raw Bayer RGB format 8/10/12/16-bit data, for example. The core processor 102 may comprise a camera interface with windowing and subsampling functions, which may be utilized to connect to a mobile TV front end, for example.

The core processor 102 may comprise a plurality of serial interfaces, for example, a USB 1.1 slave, an inter-integrated circuit (I²C) master, a serial peripheral interface (SPI) master and a universal asynchronous receiver/transmitter (UART) for Bluetooth or IrDA. The I²C master interface may control image sensors and may be a connected to smart batteries and other peripherals. The SPI master interface may be utilized to control image sensors. Two chip selects may be provided, for example, to work in a polled mode with interrupts or via DMA. The core processor 102 may comprise a LCD controller and interface that may support multiple displays with XGA resolution and handle 8/9/16/18/21-bit video data, for example.

The baseband flash block 124 may comprise suitable logic, circuitry and/or code that may receive data from the core processor 102 via an 8/16 bit parallel host interface, for example. The host interface may provide two channels with independent address and data registers through which the host processor may be able to read and/or write directly to the memory space of the core processor 102. The baseband block 126 may comprise suitable logic, circuitry and/or code that may communicate with the core processor 102 via an interface such as an 8/16 bit parallel host interface. The keypad block 128 and the RF block 130 may comprise suitable logic, circuitry and/or code that may be with the baseband block 126. The antenna 132 may be coupled to the RF block 130. The core processor 102 may comprise a baseband interface that appears as a memory mapped peripheral to the host with a 3-bit address and an 8/16-bit data bus, for example. The baseband interface may have a dual software channel with a power efficient bypass mode.

The main LCD block 134 may comprise suitable logic, circuitry and/or code that may receive data from the core processor 102 via a display controller and a second external memory interface, for example. The display controller comprise suitable logic, circuitry and/or code that may drive an internal TV out function or be connected to a range of LCD's. The display controller may support a range of screen buffer formats and may utilize direct memory access (DMA) to access the buffer directly and minimize processor overhead. NTSC and PAL raster formats may be generated by the display controller for driving the TV out.

The sub LCD block 136 may comprise suitable logic, circuitry and/or code that may communicate with the core processor 102 via a second external memory interface, for example. The core processor 102 may comprise a RGB external data bus. The core processor 102 may enable scaling of an input image with pixel level interpolation and a configurable refresh rate.

The optional flash block 138 may comprise suitable logic, circuitry and/or code that may communicate with the core processor 102 via an external memory interface, for example. The optional SDRAM block 140 may comprise suitable logic, circuitry and/or code that may receive data from the core processor 102 via an external memory interface, for example. The core processor 102 may comprise a high speed memory interface to connect to SDRAM, SRAM, Flash and external peripherals, for example. Control and timing information for the SDRAM and other asynchronous devices may be configurable by the core processor 102. The core processor 102 may further comprise a secondary memory interface to connect to connect to memory-mapped LCD and external peripherals, for example. The secondary memory interface may be utilized to connect to slower devices without compromising the speed of external memory access. The secondary memory interface may provide 16 data lines, for example, and 6 chip select/address lines, for example, and programmable bus timing for setup, access and hold times. The core processor 102 may provide support for NAND/NOR Flash including NAND boot and high speed direct memory access (DMA), for example.

The core processor 102 may be utilized for a plurality of applications in the field of mobile video with minimum power consumption. The programmable nature of the core processor 102 may allow flexibility and adaptability, allowing it to run existing and new CODECs as they become available. PC application-type editing functionalities for the mobile device 102a. For example, the image editor 116a may enable editing functionalities found in PC applications such as Photoshop™. The core processor 102 may be capable of running high quality 3D games with performance comparable to home consoles. The parallel nature of the vector processing unit may allow a game developer to exploit high end features normally found in hardware supported desktop gaming such as pixel shading and volumetric lighting, while consuming very little power. For example, the core processor 102 may facilitate image editing capabilities on a handheld mobile communication device, such as a mobile phone, by utilizing the image editor 103.

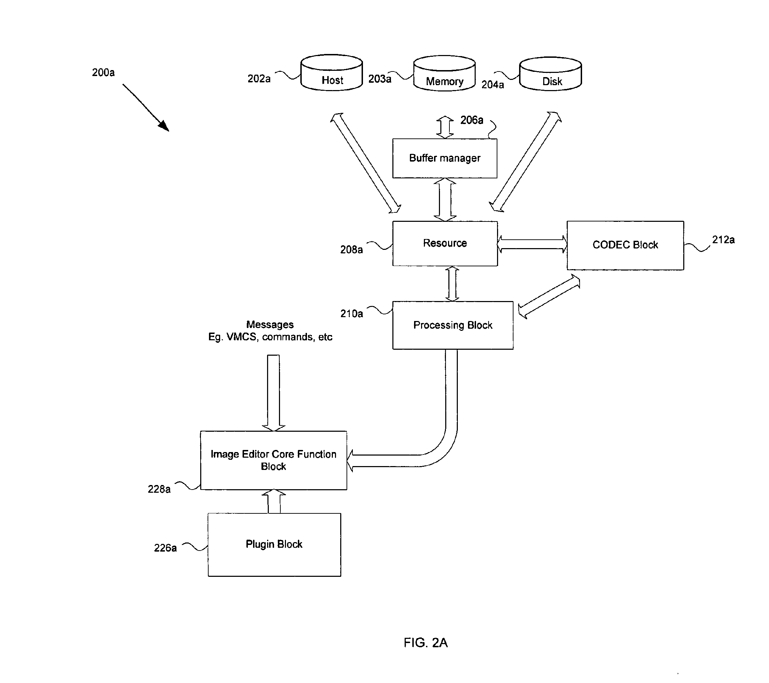

FIG. 2A is a high level block diagram illustrating an exemplary image editor, in accordance with an embodiment of the invention. Referring to FIG. 2A, the image editor 200a may comprise a host 202a, memory 203a, disk 204a, buffer manager 206a, resource block 208a, processing block 210a, CODEC block 212a, plugin block 226a, and image editor core function block (IECFB) 228a. The resource block 208a, the processing block 210a, the CODEC block 212a, the plugin block 226a, and the IECFB 228a within the image editor 200a may be implemented in software and/or firmware within a mobile multimedia chip, such as the mobile multimedia chip 114a in FIG. 1A.

The host 202a may comprise a host processor that may be integrated with a mobile multimedia device such as a mobile telephone. The memory 203a may comprise suitable memory that may enable storing of video information, code and/or operating data. The disk 204a may enable storing of, for example, video information. The buffer manager 206a may comprise suitable logic, circuitry and/or code that may handle storage in the memory block 203a. The resource block 208a may comprise suitable logic, circuitry, and/or code that may handle the allocation and de-allocation of resources for the host 202a, memory 203a, disk 204a, and/or the buffer manager 206a.

The processing block 210a may comprise suitable logic, circuitry, and/or code that may enable processing of input images. The CODEC block 212a may comprise suitable logic, circuitry, and/or code that may enable management of one or more CODEC blocks, such as a RAW CODEC block, a PNG CODEC block, a JPEG CODEC block, and/or a GIF CODEC block.

The image editor core function block (IECFB) 228a may comprise suitable logic, circuitry and/or code and may handle image operation requests and/or various image effects to be applied to one or more images processed by the processing block 210a. For example, the IECFB 228a may handle cropping, resizing, rotating, transparent fill, mask fill, and/or CamPlus™ effects. The plugin block 226a may comprise suitable logic, circuitry, and/or code that may manage one or more plugins that may be defined by a user.

In operation, video data may be communicated from the host 202a, the memory 203a, and/or the disk 204a to the processing block 210a via the buffer manager 206a. The processing block 210a may be implemented in software and/or firmware and may utilize the CODEC block 212a and the resource block 208a to process or decode received video data. Video data processed by the processing block 210a may be communicated to the IECFB 228a for further processing. For example, the IECFB 228a may further edit the processed video data and/or apply one or more visual effects implemented via the plugin block 226a.

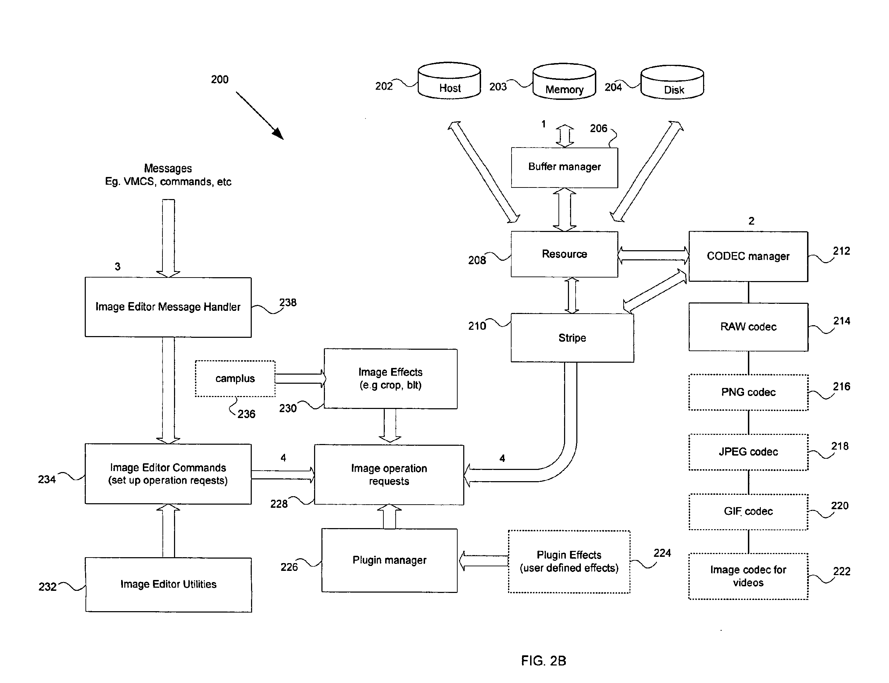

FIG. 2B is a block diagram illustrating an exemplary image editor, in accordance with an embodiment of the invention. Referring to FIG. 2B, there is shown a host 202, memory 203, disk 204, buffer manager 206, resource block 208, stripe block 210, CODEC manager block 212, plugin effects block 224, and a plugin manager block 226. There is also shown a plurality of CODECs comprising a RAW CODEC block 214, a PNG CODEC block 216, a JPEG CODEC block 218, a GIF CODEC block 220, and an image CODEC for video block 222. FIG. 2B further comprises image operation requests block 228, image effects block 230, CAMPLUS block 236, image editor utilities block 232, image editor commands block 234, and image editor message handler block 238.

The host 202 may comprise a host processor that may be integrated with a mobile multimedia device such as a mobile telephone. The memory 203 may comprise suitable memory that may enable storing of video information, code and/or operating data. The disk 204 may enable storing of, for example, video information. The buffer manager 206 may comprise suitable logic, circuitry and/or code that may handle storage in the memory block 203.

The resource block 208 may comprise suitable logic, circuitry, and/or code that may handle the allocation and de-allocation of resources for the host 202, memory 203, disk 204, and/or the buffer manager 206. Resources handled by the resource block 208 may comprise memory buffers that may be identified by a user defined ID rather than an absolute memory address. In addition, image file information such as image file format and/or image file location may be transparent or hidden from the host 202, thereby allowing addition of file formats and the processing of compressed images which may be loaded into memory 203. The image editor 200 may utilize a unified resource concept in order to allow one or more processing commands to operate on images residing on different physical media, for example. In this regard, a resource may comprise image data stored in a location, which may be a physical file, a location in memory, a location in host memory, a blank resource and/or a transfer buffer. A file resource may identify the location of a file and may comprise a pathname that specifies where the file is located. In addition to identifying internally located files, a file resource may also identify externally located files. A memory resource may be utilized to store raw images. This significantly reduces data access times. For data that resides on a host system, a host resource may be utilized to access that data via a host address. The blank resource may be utilized for creating "new" images, and may also be used as an input. The image format may be isolated from the physical location of the data to facilitate processing of video data, such as a JPEG file stored in memory, or adding a new CODEC to handle new image/video formats. Each resource may comprise a stripe interface, such as the stripe block 210, which the resource block 208 may utilize for processing of input video data.

The stripe block or stripe interface 210 may comprise suitable logic, circuitry, and/or code that may handle processing of a stripe of input images. Each resource may be communicated to the image operation request block 228 via the stripe block 210. The stripe interface 210 may return a next stripe from an input image, if there is any, and to rake the next stripe and save it to a corresponding output image. The stripe interface may also be utilized to convert between a native image format and an operating image format. Most image operations may be stripe based, which may comprise reading the next stripe from the input image, processing the stripe, and writing the stripe out to the output image. Due to memory constraints, an image may be processed on a piece meal basis. In this regard, a stripe may be read, processed, and written to memory such as the memory 203.

The CODEC manager block 212 may comprise suitable logic, circuitry, and/or code that may handle management of one or more CODEC blocks. For example, the CODEC manager block 212 may handle management of the RAW CODEC block 214, the PNG CODEC block 216, the JPEG CODEC block 218, the GIF CODEC block 220, and/or the image CODEC for video block 222. In this regard, the CODEC manager block 212 may manage loading and unloading of different image CODECs.

The RAW CODEC block 214 may comprise suitable code that may be compiled directly or statically into the image editor REF#. The PNG CODEC block 216 may comprise suitable logic, circuitry, and/or code that may handle PNG compression and decompression of various images. The PNG CODEC block 216 may be dynamically loaded into the image editor REF#. The JPEG CODEC block 218 may comprise suitable logic, circuitry, and/or code that may handle JPEG compression and decompression of various images. One or more of the CODECs such as the JPEG CODEC block 216 may be dynamically loaded into the image editor REF#. The GIF CODEC block 220 may comprise suitable logic, circuitry, and/or code that may handle GIF compression and decompression of various images. The image CODEC for video block 222 may comprise suitable logic and/or code that may handle image compression and decompression of various images.

The plugin effects block 224 may comprise suitable logic, circuitry and/or code that may handle various plugin effects that may be user defined. For example, a "red eye" reduction plugin may be created as a third party application, which may operate on images processed by the image editor 200.

The plugin manager block 226 may comprise suitable logic, circuitry, and/or code that may manage plugin that may be defined by a user. In this regard, the plugin manager block 226 may handle various functions for the plugin effects block 224. In accordance with an embodiment of the invention, some advanced plugin operations may require a whole frame of image data, in which case the stripe interface 210 may be bypassed. In this regard, image data may be read from and/or written directly to a resource supplied by the resource block 208. There may be instances where the same resource may not be used simultaneously as input and an output. In this regard, simultaneous use of a resource as an input and an output may result in data corruption since an image may be processed a stripe at a time and written back to a file. An exception to this may occur when both the input and the output are in memory and the data is in RAW format. An image editor with plugin capability for editing images in a mobile communication device is described in more detail in United States Patent Application Serial No. (Attorney Docket No. 17064US02) filed on even date herewith, which is incorporated herein by reference in its entirety.

The image operation requests block 228 may comprise suitable logic, and/or code that may handle image operation requests. The image effects block 230 may comprise suitable logic, circuitry, and/or code that may handle various image effects such as cropping, resizing, rotating, transparent bit, mask fill, and/or CamPlus™. The "transparent blt" operation may be used to paste a target image on top of an original image at locations where the color of the target image is not a defined transparent color. The CAMPLUS block 236 may comprise suitable logic and/or code that may enable handling of CamPlus™ imaging effects. The image editor utilities block 232 may comprise suitable logic and/or code that may handle various image editor utilities that may run on the host 202. The image editor commands block 234 may comprise suitable logic, circuitry and/or code that may set up operation requests that may be associated with image editor commands.

The image editor message handler block 238 may comprise suitable logic, circuitry, and/or code that may handle management of image editor messages. For example, the image editor message handler block 238 may enable handling of commands that may cause it to halt processing, abort processing, complete processing, initiate processing, and provide a notification when processing is complete, for example. For example, a command that initiates processing cause processing of a next strip of input images.

In one embodiment of the invention, the buffer manager 206, the resource block 208, the stripe block 210, the CODEC manager block 212, the plugin effects block 224, the plugin manager block 226, the CODEC blocks 212, ..., 222, the image operation requests block 228, the image effects block 230, the CAMPLUS block 236, the image editor utilities block 232, the image editor commands block 234, and the image editor message handler block 238 may be implemented in software and/or firmware within a mobile multimedia chip, such as the mobile multimedia chip 114a in FIG. 1A.

In operation, the buffer manager 206 within the image editor 200 may manage image data in the memory 203 using a user-defined identifier. Based on an image format, the CODEC manager may load an appropriate CODEC into memory 203. In the cases of a JPEG or PNG formatted image, the JPEC CODE 218 or the PNG CODEC 216 may be dynamically loaded respectively. Based on a command that is received, the image editor commands block 234 may setup the correct request, which is then operated on the stripes of image data that is indicated by the stripe block 210. In one embodiment of the invention, the image editor 200 may process image data such as one or more still images. However, the present invention may not be so limited and the image editor 200 may also process image data, such as video data, from a video stream.

If external memory is available to the image editor 200, memory resources for storing video data may be created in the external memory. If there is not enough memory in the external memory, an error message may be generated by the image editor 200. In one embodiment of the invention, memory buffers may be freed in the reverse order in which they are allocated to minimize memory fragmentation. Furthermore, the maximum number of memory buffers allowed may be fixed to a particular value and may be changed to achieve flexibility of implementation. Memory resources may also be used as temporary files to store raw data in order to speed up image operations.

If external memory is not available, the image editor 200 may be run in a low memory mode, during which 24 bits-per-pixel (bpp) raw images and PNG may not be supported. Image operations that run internally at 24 bpp may run in 16 bpp instead. However, the color arguments to these commands may still be specified as 24 bpp values. Some image operations, for example, displaying non-JPEG images or rotating JPEG images, may be slower than in the case where there is external memory because image editor makes use of temporary files.

An architecture for and image editor used for editing images in a mobile communication device is described in more detail in United States Patent Application Serial No. (Attorney Docket No. 17063US02) filed on even date herewith, which is incorporated herein by reference in its entirety.

In one embodiment of the invention, the image editor 200 may comprise worker threads, in addition to a main application thread, which is the message handler. In this regard, a worker thread may be devoted to executing any pending image operations, while the other worker thread may be devoted to outputting processed video data to a display, such as a display on a mobile device.

In another embodiment of the invention, the image editor commands block 234 may set up operation requests that may be associated with a plurality of image editor commands. Each command for the image editor 200 may be communicated to the image editor commands block as an input resource string and the corresponding command output may be communicated to the image operations request block 228 as an output resource string. Some image editor commands handled by the image editor commands block 234 may be utilized to return a status of the image editor 200, to setup an input image for a current and/or subsequent image operation, to return a dimension of an image that is being edited by the integrated image editor 200, and to stop a running image operation. Other image editor commands handled by the image editor commands block 234 may be utilized to set up a display window allocated to a given program application utilizing the image editor 200, to refresh or transform the display, and to copy a selected portion of the image display for further processing.

Additional image editor commands handled by the image editor commands block 234 may be utilized to rotate an image with a mirroring function, which may be optional, after the rotation, to fill a region of an image with a color determined by, for example, a 24 bpp value, to paste a second image onto a first image open for editing in a solid or transparent color, to fill a solid color in a portion of an open image, and to apply a CamPlus effect to an open image. Other image editor commands handled by the image editor commands block 234 may be utilized to resize an image to a given new size and to crop an image to a determined new region. Image editor commands related to memory use may be handled by the image editor commands block 234 and may be utilized to remove or delete a memory resource or a memory buffer, to list all buffers in the memory 203, and to delete all memory resources. Image editor commands related to plugin use may be handled by the image editor commands block 234 and may be utilized to add an input image to be used by a plugin, to set an output image for a plugin, to list one or more resource strings for debugging, to reset resource strings, to run a plugin, and/or to obtain a list of visual effects from a plugin.

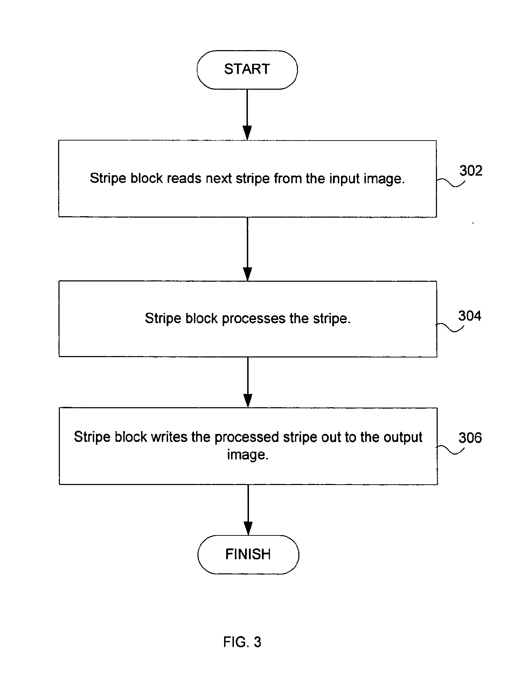

FIG. 3 is a flow diagram of exemplary steps for processing video data utilizing a striping method, in accordance with an embodiment of the invention. In one embodiment of the operation, striping may be utilized during image editing in a mobile multimedia processor. Referring to FIGs. 2B and 3, most image operations within the image editor 200 may be stripe based. The stripe interface 210 may also be utilized to convert between a native image format and an operating image format of video data received from the host 202, the memory 203, and/or the disk 204. In this regard, the stripe block 210 within the image editor 200 may be utilized to read a next stripe from the input image, process the stripe, and writing the stripe out to the output image. Due to memory constraints, an image may be processed on a piece meal basis. In this regard, a stripe may be read, processed, and written to memory such as the memory 203. At 302, the stripe block 210 within the image editor 200 may read the next stripe from the input image received from the disk 204 or from the memory 203. At 304, the acquired stripe may be processed within the image editor 200. At 306, the processed stripe of video data may be written out to an output image. The processed output image may be stored in the memory 203, for example, and a request for image editing may be communicated to the image operation request block 228. Image editing operations may be applied to the processed image via the image effects block 230. Furthermore, one or more plugin effects may be applied to the processed image via the plugin manager 226.

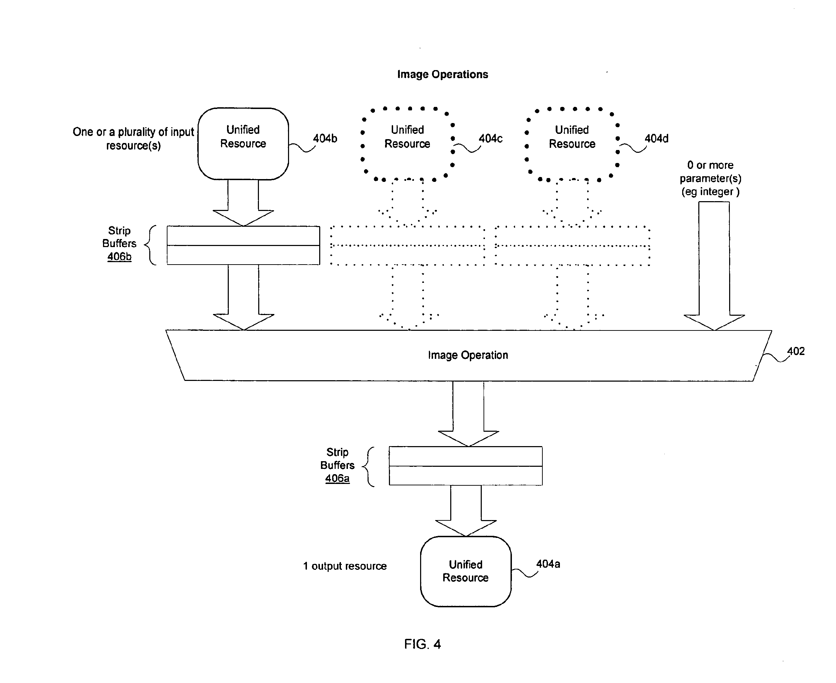

FIG. 4 is a block diagram of illustrating image operation for the image editor of FIG. 2B, for example, in accordance with an embodiment of the invention. Referring to FIG. 4, there is shown an image operation block 402, unified resources blocks 404a, 404b, 404c, 404d, and strip buffer blocks 406a, 406b. The unified resources blocks 404b, 404c, and 404d may be input unified resource blocks while the unified resources blocks 404a may be an output resource block. Each of the input unified resource blocks 404b, 404c, and 404d may handle one or a plurality of input resources and the output unified resource block may handle a single output resource. The unified resource blocks 404b, 404c, and 404d may comprise image data stored in a location, which may be a physical file, a location in memory, a location in host memory, and/or a blank resource.

An input resource may comprise data communicated to the image editor 200 for editing. An output resource may comprise processed video data, which may have been edited by the image editor 200. The blank resource may be utilized for creating "new" images, and may also be used as an input. The image format may be isolated from the physical location of the data to facilitate processing of video data, such as a JPEG file stored in memory, or adding a new CODEC to handle new image/video formats. Each resource may comprise a stripe interface, which the image operations block 402 may utilize for processing of input video data.

In an exemplary operation, one or more unified input resources from a unified resource block 404b may be processed utilizing the strip buffer block 406b and passed to the image operation block 402. The image operation block 402 may receive input parameters that may be utilized to operate on the output generated from the strip buffers 406b. A resulting output from the image operation block 402 may be communicated to the strip buffers 406a and may be provided to the unified resource block 404a. The unified resource block 404a may comprise an output resource. In this regard, video data edited by the image editor 200 may be communicated and stored in the memory 203, the disk 204 or in a storage outside the image editor 200, such as off-chip memory, for example.

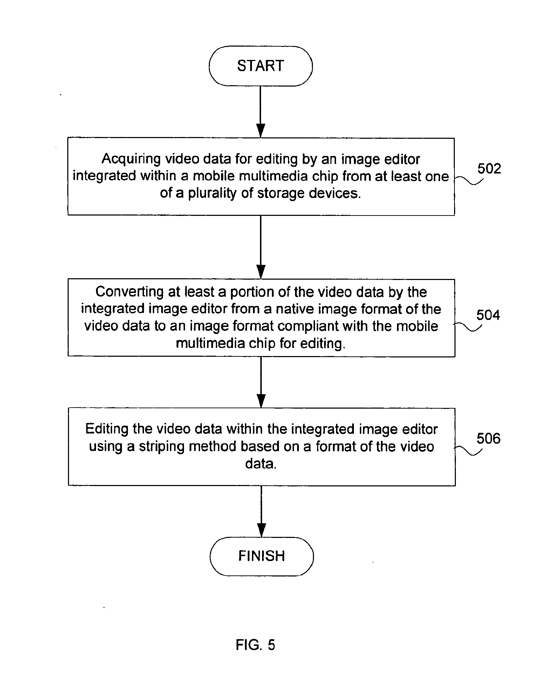

FIG. 5 is a flow diagram of exemplary steps for processing multimedia data, in accordance with an embodiment of the invention. Referring to FIGs. 1A and 5, at 502, the image editor 116a integrated within the mobile multimedia chip 114a may acquire video data for editing from at least one of a plurality of storage devices. For example, the integrated image editor 116a may acquire data wirelessly from a remote storage device via the antenna 104a. In addition, the integrated image editor 116a may acquire video data from external memory 106a via the connection 105a. At 504, at least a portion of the acquired video data may be converted by the integrated image editor 116a from a native image format of the video data to an image format compliant with the mobile multimedia chip for editing. At 506, the integrated image editor 116a may edit the acquired video data using a striping method based on a format of the video data. Furthermore, the integrated image editor 116a may utilize a plugin 112a that interfaces within the mobile multimedia chip 114a and/or with the integrated image editor 116a. For example, the plugin 112a may be utilized to provide "red eye" reduction functionalities during editing of the acquired video data.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for processing multimedia information, the method comprising editing image data within a mobile multimedia chip comprising an integrated image editor.

2. The method according to claim 1, further comprising acquiring at least a portion of said image data for said editing from at least one of a plurality of storage devices.

3. The method according to claim 2, wherein said at least one of said plurality of storage devices is one of the following: integrated within said mobile multimedia chip, and located external to said mobile multimedia chip.

4. The method according to claim 1, wherein said mobile multimedia chip is integrated within a mobile device comprising a visual display that displays at least a portion of said edited image data.

5. The method according to claim 1, further comprising editing said image data within a mobile multimedia chip independent of a file format associated with said image data.

6. The method according to claim 1, further comprising editing said image data within said mobile multimedia chip independent of a source location of said image data.

7. A system for processing multimedia information, the system comprising an image editor integrated within a mobile multimedia chip that edits image data received within said mobile multimedia chip.

8. The system according to claim 7, wherein said image editor integrated within said mobile multimedia chip acquires at least a portion of said image data for said editing from at least one of a plurality of storage devices.

9. The system according to claim 8, wherein said at least one of said plurality of storage devices is one of the following: integrated within said mobile multimedia chip, and located external to said mobile multimedia chip.

10. The system according to claim 7, wherein said image editor integrated within said mobile multimedia chip is integrated within a mobile device comprising a visual display that displays at least a portion of said edited image data.
